# EUROPÄISCHE PATENTSCHRIFT

(11) **EP 2 603 470 B1**
(45) Veröffentlichungstag und Bekanntmachung des Hinweises auf die Patenterteilung: **08.10.2014**
(21) Anmeldenummer: 11746514.6
(22) Anmeldetag: 02.08.2011
(51) Int. Cl.: C04B 28/10

(54) **BESCHICHTUNGSMITTEL ZUR HERSTELLUNG VON DAUERFLEXIBLEN BESCHICHTUNGEN**
COATING AGENTS FOR PRODUCING PERMANENTLY FLEXIBLE COATINGS
PRODUITS DE REVÊTEMENT POUR LA RÉALISATION DE REVÊTEMENTS DE FLEXIBILITÉ PERMANENTE

(30) Priorität: 13.08.2010 DE 102010039319
(43) Veröffentlichungstag der Anmeldung: 19.06.2013
(73) Patentinhaber: Wacker Chemie AG, 81737 München (DE)
(72) Erfinder: HEROLD, Hardy, 84489 Burghausen (DE); SCHICKOR, Roland, 84359 Simbach (DE)
(74) Vertreter: Ege, Markus
(86) Internationale Anmeldenummer: PCT/EP2011/063258
(87) Internationale Veröffentlichungsnummer: WO 2012/019939

(56) Entgegenhaltungen:
- EP-A2- 2 085 367
- AT-B- 237 159
- AT-B- 381 696
- CH-A- 502 280
- DE-A1- 10 109 841
- DE-A1-102008 043 988
- DE-B- 1 021 288
- DE-B- 1 269 022
- FR-A- 1 108 445
- YAMANE, T. ET AL: "Mixed lime plaster compositions", CHEMICAL ABSTRACTS, Bd. 102, Nr. 22, 3. Juni 1985 (1985-06-03) , Seite 308, XP000184321, ISSN: 0009-2258

## Beschreibung

Die Erfindung betrifft Beschichtungsmittel auf Basis von mineralischen Bindemitteln, Polymeren und Füllstoffen sowie deren Verwendung zur Herstellung von dauerflexiblen Beschichtungen.

Im Baubereich ist der Einsatz von Beschichtungsmitteln auf Basis von mineralischen Bindemitteln, Polymeren und Füllstoffen zur Herstellung von flexiblen Beschichtungen bekannt. Derartige Beschichtungsmittel werden beispielsweise als Dichtungsschlämme eingesetzt, wie in der US 6166113 oder der DE-A 19620817 beschrieben. Aus der US 4710526 sind Mörtelzusammensetzungen auf Basis von Zement und kationischen Polymeren zur Herstellung von flexiblen Beschichtungen mit guten adhesiven Eigenschaften bekannt. Die KR 100913255 beschreibt zementäre, Polymer-modifizierte Mörtelzusammensetzungen zur Herstellung von Bauprodukten mit einer höheren mechanischen und chemischen Beständigkeit. Die GB 1236263 offenbart Zusammensetzungen auf Basis von mineralischen Bindemitteln, Füllstoffen und Polymeren sowie Additiven, wie Hydroxy-Carbonsäuren. Die US 5543188 empfiehlt Membranen enthaltend eine Polymerschicht, die mit zementären Trockenmischungen imprägniert sind. Die US 2008/0060299 und die US 2006/0054059 beschreiben flexible Membrane auf Basis von Kunststoffmatten, die mit flexiblen zementären, polymermodifizierten Beschichtungen versehen sind.

Die bisher bekannten Beschichtungsmittel führen allerdings zu Beschichtungen, die im Laufe der Zeit langsam verspröden und somit nicht dauerflexibel sind. Die Versprödung äußert sich in einem Nachlassen der Reißdehnung bzw. der Rissüberbrückung der Beschichtungen. Die rissüberbrückenden Eigenschaften der Beschichtungen sind aber wesentlich, um die beschichteten Substrate zu schützen. Risse können in den Substraten, wie Bauwerken, in Folge von Erdbeben oder Alterungsprozessen oder sonstigen mechanischen Belastungen entstehen. Die flexiblen Beschichtungen sollen derartige Risse überbrücken und auf diese Weise ein Eindringen von Wasser in die Substrate unterbinden. Wenn nun aber die Beschichtungen versprödet sind und folglich nicht mehr flexibel sind, neigen die Beschichtungen im Laufe der Zeit selbst zur Rissbildung oder nehmen sonst wie Schaden, so dass Wasser durch die Beschichtungen hindurch in die darunterliegenden Substrate eindringen kann, was entsprechende Wasserschäden nach sich zieht. In Folge der Versprödung erfüllen die Beschichtungen also ihren Zweck nicht mehr bzw. nicht mehr hinreichend. Die Versprödung tritt verstärkt auf, wenn die Beschichtungen feuchten oder gar nassen Bedingungen ausgesetzt sind. Mit dauerflexiblen, d.h. dauerhaft flexiblen Beschichtungen sollten derartige Schäden unterbunden werden.

Vor diesem Hintergrund bestand die Aufgabe, Beschichtungsmittel zur Herstellung von dauerflexiblen Beschichtungen bereitzustellen, die hinsichtlich Versprödung, insbesondere auch unter feuchten oder nassen Bedingungen, weniger anfällig und folglich dauerhaft flexibel sind.

Ein Gegenstand der Erfindung sind Beschichtungsmittel auf Basis von einem oder mehreren mineralischen Bindemitteln, einem oder mehreren Polymeren, einem oder mehreren Füllstoffen und gegebenenfalls einem oder mehreren Additiven, dadurch gekennzeichnet, dass
2 bis 30 Gew.-% Kalk, bezogen auf das Trockengewicht der Beschichtungsmittel, als ein mineralisches Bindemittel und 0 bis 3 Gew.-% Fasern, bezogen auf das Trockengewicht der Beschichtungsmittel, im Beschichtungsmittel enthalten sind,
wobei die mineralischen Bindemittel zu 80 bis 100 Gew.-% Kalk sind, bezogen auf das Trockengewicht der mineralischen Bindemittel, und
die Polymere ausgewählt werden aus der Gruppe umfassend Mischpolymerisate von einem oder mehreren Vinylestern mit 1 bis 50 Gew.-% Ethylen;
Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest;
Mischpolymerisate von ein oder mehreren Vinylestern, 1 bis 50 Gew.-% Ethylen und vorzugsweise 1 bis 60 Gew.-%
(Meth) Acrylsäureester von unverzweigten oder verzweigten Alkoholen mit 1 bis 15 C-Atomen; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-%
(Meth) Acrylsäureester von unverzweigten oder verzweigten Alkoholen mit 1 bis 15 C-Atomen, welche noch 1 bis 40 Gew.-% Ethylen enthalten;
Mischpolymerisate mit ein oder mehreren Vinylestern, 1 bis 50 Gew.-% Ethylen und 1 bis 60 Gew.-% Vinylchlorid.

Geeignete Vinylester sind beispielsweise solche von Carbonsäuren mit 1 bis 15 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9^{R} oder VeoVa10^{R} (Handelsnamen der Firma Resolution). Besonders bevorzugt ist Vinylacetat.

Geeignete Monomeren aus der Gruppe Acrylsäureester oder Methacrylsäureester sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Gegebenenfalls können noch 0 bis 10 Gew.-%, bezogen auf das Gesamtgewicht des Monomergemisches, Hilfsmonomere copolymerisiert werden. Bevorzugt werden 0,1 bis 5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Diallylphthalat, Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Die Polymere werden ausgewählt werden aus der Gruppe umfassend Mischpolymerisate von einem oder mehreren Vinylestern mit 1 bis 50 Gew.-% Ethylen; Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9, VeoVa10, VeoVa11; Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen, insbesonders n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten; Mischpolymerisate mit ein oder mehreren Vinylestern, 1 bis 50 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Am meisten bevorzugt werden Mischpolymerisate mit Vinylacetat und 5 bis 50 Gew.-% Ethylen; oder Mischpolymerisate mit Vinylacetat, 1 bis 50 Gew.-% Ethylen und 1 bis 50 Gew.-% von einem Vinylester von α-verzweigten Monocarbonsäuren mit 9 bis 11 C-Atomen; oder Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten; oder Mischpolymerisate mit Vinylacetat, 5 bis 50 Gew.-% Ethylen und 1 bis 60 Gew.-% Vinylchlorid.

Die Monomerauswahl bzw. die Auswahl der Gewichtsanteile der Comonomere erfolgt dabei so, das eine Glasübergangstemperatur Tg von -50°C bis +30°C, vorzugsweise -40°C bis +10°C, besonders bevorzugt -30°C bis 0°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Polymere erfolgt im Allgemeinen in wässrigem Medium und bevorzugt nach dem Emulsions- oder Suspensionspolymerisationsverfahren - wie beispielsweise in DE-A 102008043988 beschrieben. Die Polymere fallen dabei in Form von wässrigen Dispersionen an. Bei der Polymerisation können die gängigen Schutzkolloide und/oder Emulgatoren eingesetzt werden, wie in der DE-A 102008043988 beschrieben. Die Schutzkolloide können anionisch oder vorzugweise kationisch oder nichtionisch sein. Bevorzugt sind auch Kombinationen von kationischen und nichtionischen Schutzkolloiden. Bevorzugte nichtionische Schutzkolloide sind Polyvinylalkohole. Bevorzugte kationische Schutzkolloide sind Polymere, die ein oder mehrere kationische Ladungen tragen, wie beispielsweise in E. W. Flick, Water Soluble Resins - an Industrial Guide, Noyes Publications, Park Ridge, N.J., 1991, beschrieben. Bevorzugt werden als Schutzkolloide teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Die Polymere in Form von wässrigen Dispersionen können wie in der DE-A 102008043988 beschrieben in entsprechende in Wasser redispergierbare Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole bevorzugt.

Erfindungswesentlich ist der Einsatz von Kalk als ein mineralisches Bindemittel. Als Kalk kann beispielsweise Kalkhydrat, Weißkalkhydrat, Calciumoxid (ungelöschter Kalk) oder hochhydraulischer Kalk eingesetzt werden.

Geeignete mineralische Bindemittel sind neben Kalk beispielsweise Zement, insbesondere Portlandzement, Aluminatzement, insbesondere Calcium-Sulfo-Aluminatzement, Trasszement, Hüttenzement, Magnesiazement, Phosphatzement, und Hochofenzement, sowie Mischzemente, Füllzemente, Flugasche, Microsilica, Hüttensand, oder Gips. Neben Kalk können also ein oder mehrere weitere mineralische Bindemittel in den Beschichtungsmitteln enthalten sein. Als weitere mineralische Bindemittel sind vorzugsweise ein oder mehrere zementäre Bindemittel enthalten ausgewählt aus der Gruppe umfassend Zement, insbesondere Portlandzement, Aluminatzement, insbesondere Calcium-Sulfo-Aluminatzement, Trasszement, Hüttenzement, Magnesiazement, Phosphatzement, und Hochofenzement, sowie Mischzemente, Füllzemente.

Beispiele für geeignete Füllstoffe sind Quarzsand, Quarzmehl, Kalksteinmehl, Calciumcarbonat, Dolomit, Ton, Kreide, Weißkalkhydrat, Talkum oder Glimmer, Gummigranulat oder Hartfüllstoffe, wie Aluminiumsilicate, Korund, Basalt, Carbide, wie Siliciumcarbid oder Titancarbid, oder puzzolanisch reagierende Füllstoffe, wie Flugasche, Metakaolin, Mikrosilica. Bevorzugt werden als Füllstoffe Quarzsand, Quarzmehl, Kalksteinmehl, Calciumcarbonat, Calciummagnesiumcarbonat (Dolomit) oder Kreide. Vorzugsweise umfassen die Füllstoffe kein Kies. Kies hat im Allgemeinen mittlere Teilchendurchmesser von ≥ 4 mm.

Es können auch beliebige Gemische der genannten Füllstoffe eingesetzt werden. Bevorzugte Gemische umfassen ein oder mehrere silikatische Füllstoffe, wie Sand, und ein oder mehrere carbonatische Füllstoffe ausgewählt aus der Gruppe umfassend Calciumcarbonat, Kreide, Dolomit und Kalkstein. Bevorzugte Gemische enthalten ein oder mehrere silikatische Füllstoffe und ein oder mehrere carbonatische Füllstoffe im Verhältnis von 1 zu 1 bis 4 zu 1.

Die Füllstoffe haben vorzugsweise mittlere Teilchendurchmesser von 0,01 bis 4 mm, besonders bevorzugt 0,02 bis 3 mm und am meisten bevorzugt 0,03 bis 2 mm.

Vorzugsweise haben mindestens 50 bis 100 Gew.-% der Füllstoffe einen Durchmesser von 0,001 bis 0,5 mm; besonders bevorzugt haben mindestens 70 bis 100 Gew.-% der Füllstoffe einen Durchmesser von 0,01 bis 0,3 mm; jeweils bezogen auf das Trockengewicht der insgesamt eingesetzten Füllstoffe. In Folge der erfindungsgemäßen Teilchendurchmesser der Füllstoffe erleiden die Beschichtungsmittel im Zuge der Herstellung der dauerflexiblen Beschichtungen einen geringeren Schwund, was der Rissbildung innerhalb der dauerflexiblen Beschichtungen entgegenwirkt und der Rissüberbrückung förderlich ist.

Typische Rezepturen für die Beschichtungsmittel enthalten vorzugsweise 10 bis 60 Gew.-%, besonders bevorzugt 20 bis 55 Gew.-% und am meisten bevorzugt 30 bis 50 Gew.-% Polymere; vorzugsweise 2 bis 30 Gew.-%, besonders bevorzugt 2 bis 20 Gew.-% und am meisten bevorzugt 3 bis 15 Gew.-% Kalk; vorzugsweise 10 bis 80 Gew.-%, besonders bevorzugt 20 bis 70 Gew.-% und am meisten bevorzugt 40 bis 60 Gew.-% Füllstoffe; wobei sich die Angaben in Gew.-% auf das Trockengewicht der Beschichtungsmittel beziehen und sich insgesamt auf 100 Gew.-% addieren.

Die mineralischen Bindemittel umfassen zu 80 bis 100 Gew.-% Kalk, bezogen auf das Trockengewicht der mineralischen Bindemittel (= einschließlich Kalk).

Die mineralischen Bindemittel umfassen vorzugsweise zu 0 bis 70 Gew.-%, besonders bevorzugt 0 bis 50 Gew.-% und am meisten bevorzugt 0 bis 20 Gew.-% zementäre Bindemittel, bezogen auf das Trockengewicht der mineralischen Bindemittel (= einschließlich Kalk).

In einer alternativen, bevorzugten Ausführungsform enthalten die Beschichtungsmittel keine zementären Bindemittel, Flugasche, Microsilica, Hüttensand und Gips. Besonders bevorzugt enthalten die Beschichtungsmittel keine zementären Bindemittel.

Die Beschichtungsmittel sind vorzugsweise Trockenmischungen. Die Beschichtungsmittel werden im Allgemeinen direkt vor ihrer Applikation durch Zugabe von Wasser in wässrige Beschichtungsmittel überführt.

Wässrige Beschichtungsmittel enthalten vorzugsweise 15 bis 50 Gew.-% und besonders bevorzugt 20 bis 40 Gew.-% Wasser, bezogen auf das Trockengewicht der Beschichtungsmittel.

Die anwendungstechnischen Eigenschaften der Beschichtungsmittel können durch Additive oder Zusatzstoffe verbessert werden. Geeignete Additive sind beispielsweise Pigmente, insbesondere anorganische Pigmente, wie Oxid-, Oxidhydroxid-, Sulfid-, Sulfoselenid-, Carbonat-, Chromat-, Chromat-Molybdat-Mischphasen-, oder Silicat-Pigmente. Bevorzugte Pigmente sind hierbei Titan, Eisen, Chrom oder Cadmium enthaltende Pigmente. Die am meisten bevorzugten Pigmente sind Titandioxid.

Geeignete Additive sind beispielsweise hochdisperse Kieselsäuren, auch bekannt unter der Abkürzung HDK, wie beispielsweise pyrogene Kieselsäure oder gefällte Kieselsäure. Hochdisperse Kieselsäuren sind vorzugsweise zu 0,1 bis 3 und besonders bevorzugt zu 0,1 bis 1 Gew.-%, bezogen auf das Trockengewicht der jeweiligen Beschichtungsmittel, in den Beschichtungsmitteln enthalten. Durch Einsatz von hochdispersen Kieselsäuren kann das Eindringen von Wasser in die flexiblen Beschichtungen weiter unterbunden werden. Darüber hinaus wirken sich die hochdispersen Kieselsäuren auch auf die verarbeitungstechnischen Eigenschaften vorteilhaft aus, da entsprechende wässrige Beschichtungsmittel weniger klebrig sind und im Zuge des Abbindens der mineralischen Bindemittel schneller austrocknen.

Ein bevorzugtes Additiv sind auch Schichtsilikate. Schichtsilikate enthaltende Beschichtungsmittel führen zu flexiblen Beschichtungen mit einer höheren Dichtigkeit gegenüber Wasser. Schichtsilikate sind vorzugsweise zu 0 bis 3 Gew.-% und besonders bevorzugt zu 0,1 bis 2 Gew.-%, bezogen auf das Trockengewicht der Beschichtungsmittel, enthalten.

Bevorzugte Additive sind auch Fasern. Beispiele für geeignete Fasern sind Kevlar, Viskosefasern, Polyamidfasern, Polyesterfasern, Polyacrylnitrilfasern, Dralonfasern, Polyethylenfasern, Polypropylenfasern, Polyvinylalkoholfasern, Aramidfasern oder Kohlenstofffasern. Fasern sind zu 0 bis 3 Gew.-% und besonders bevorzugt zu 0,1 bis 2 Gew.-%, bezogen auf das Trockengewicht der Beschichtungsmittel, enthalten. Der Einsatz von Fasern führt zu Beschichtungen mit stärker rissüberbrückenden Eigenschaften.

Übliche Zusatzstoffe für die Beschichtungsmittel sind Verdickungsmittel, beispielsweise Polysaccharide wie Celluloseether und modifizierte Celluloseether, Stärkeether, Guar Gum, Xanthan Gum, Polycarbonsäuren wie Polyacrylsäure und deren Teilester, sowie Polyvinylalkohole, welche gegebenenfalls acetalisiert oder hydrophob modifiziert sein können, Casein und assoziativ wirkende Verdicker. Gängige Zusatzstoffe sind auch Vernetzer wie Metall- oder Halbmetalloxide, insbesondere Borsäure oder Polyborate, oder Dialdehyde, wie Glutardialdehyd; übliche Zusatzstoffe sind auch Abbindebeschleuniger, beispielsweise Alkali- oder Erdalkalisalze von anorganischen oder organischen Säuren. Darüberhinaus sind noch zu nennen: Konservierungsmittel, Filmbildehilfsmittel, Dispergiermittel, Schaumstabilisatoren, Entschäumer, Verflüssiger, Fließmittel und Flammschutzmittel (z.B. Aluminiumhydroxid).

Im Allgemeinen beträgt der Anteil an Zusatzstoffen an den Beschichtungsmitteln insgesamt 0 bis 20 Gew.-%, vorzugsweise 0,1 bis 15 Gew.-% und besonders bevorzugt 0,1 bis 10 Gew.-%, jeweils bezogen auf das Trockengewicht der Beschichtungsmittel.

Die Herstellung der Beschichtungsmittel auf Basis von mineralischen Bindemitteln, Polymeren, Füllstoffen und gegebenenfalls Additiven ist an keine besondere Vorgehensweise oder Mischvorrichtung gebunden. Die Beschichtungsmittel sind erhältlich, indem die einzelnen Bestandteile der Rezeptur in herkömmlichen Pulvermischvorrichtungen, beispielsweise mittels Mörtel-, Beton-Mischer oder Putzmaschinen oder Rührern vermischt und homogenisiert werden. Die einzelnen Bestandteile werden beim Mischen im Allgemeinen in trockener Form eingesetzt.

Die Polymere können in Form von wässrigen Dispersionen oder vorzugsweise in Form von in Wasser redispergierbaren Pulvern eingesetzt werden.

Die flexiblen Beschichtungsmittel können beispielsweise in Form von Einkomponentensystemen oder Zweikomponentensystemen bereitgestellt werden. Einkomponentensysteme enthalten sämtliche Bestandteile der Beschichtungsmittel. Bei Einkomponentensystemen handelt es sich im Allgemeinen um Trockenformulierungen. Einkomponentensysteme werden vorzugsweise hergestellt, indem Polymere, Additive und gegebenenfalls Zusatzstoffe vorgemischt werden und mineralische Bindemittel sowie Füllstoffe zu einem späteren Zeitpunkt beigemischt werden. Zur Herstellung der wässrigen Beschichtungsmittel kann das Wasser zu einem beliebigen späteren Zeitpunkt, im Allgemeinen kurz vor Applikation der Beschichtungsmittel, beigemischt werden.

Zweikomponentensysteme umfassen eine erste Komponente und eine zweite Komponente. Die erste Komponente enthält alle Bestandteile der flexiblen Beschichtungsmittel bis auf Polymere. Die erste Komponente ist im Allgemeinen eine Trockenformulierung. Die zweite Komponente enthält die Polymere, vorzugsweise in Form von wässrigen Dispersionen. Zur Herstellung der, gegebenenfalls wässrigen, Beschichtungsmittel werden die erste Komponente und die zweite Komponente gemischt, gegebenenfalls unter Zusatz von Wasser.

Die Beschichtungsmittel eignen sich beispielsweise zur Verwendung als Dichtungsschlämme, Baukleber, Fugenmörtel, Reparaturmörtel oder Putze.

Ein weiterer Gegenstand der Erfindung ist die Verwendung der Beschichtungsmittel auf Basis von einem oder mehreren mineralischen Bindemitteln, einem oder mehreren Polymeren, einem oder mehreren Füllstoffen und gegebenenfalls einem oder mehreren Additiven zur Herstellung von dauerflexiblen Beschichtungen, dadurch gekennzeichnet, dass
2 bis 30 Gew.-% Kalk, bezogen auf das Trockengewicht der Beschichtungsmittel, als ein mineralisches Bindemittel und 0 bis 3 Gew.-% Fasern, bezogen auf das Trockengewicht der Beschichtungsmittel, im Beschichtungsmittel enthalten sind, wobei die mineralischen Bindemittel zu 80 bis 100 Gew.-% Kalk sind, bezogen auf das Trockengewicht der mineralischen Bindemittel, und
die Polymere ausgewählt werden aus der Gruppe umfassend Mischpolymerisate von einem oder mehreren Vinylestern mit 1 bis 50 Gew.-% Ethylen;
Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest;
Mischpolymerisate von ein oder mehreren Vinylestern, 1 bis 50 Gew.-% Ethylen und vorzugsweise 1 bis 60 Gew.-%
(Meth)Acrylsäureester von unverzweigten oder verzweigten Alkoholen mit 1 bis 15 C-Atomen; und
Mischpolymerisate mit 30 bis 75 Ges.-% Vinylacetat,-1 bis 30 Gew.-% Vinyllaurat oder Vinylester einer alpha-verzweigten Carbonsäure mit 9 bis 11 C-Atomen, sowie 1 bis 30 Gew.-%
(Meth)Acrylsäureester von unverzweigten oder verzweigten Alkoholen mit 1 bis 15 C-Atomen, welche noch 1 bis 40 Gew.-% Ethylen enthalten;
Mischpolymerisate mit ein oder mehreren Vinylestern, 1 bis 50 Gew.-% Ethylen und 1 bis 60 Gew.-% Vinylchlorid.

Die dauerflexiblen Beschichtungen haben Schichtdicken von vorzugsweise 1 bis 10 mm, besonders bevorzugt 2 bis 5 mm und am meisten bevorzugt 2 bis 3 mm.

Die Beschichtungsmittel können dabei auf beliebige Untergründe appliziert werden. So können die Untergründe organischer oder anorganischer, natürlicher oder künstlicher Art sein. Beispiele für natürliche Untergründe sind Boden, Fels, Gestein oder Geröll. Beispiele für künstliche Untergründe sind vorwiegend Untergründe aus dem Baubereich, wie Substrate basierend auf Zusammensetzungen enthaltend mineralische Bindemittel, insbesondere Beton oder Estrich, aber auch Holz-, Kunststoffe, insbesondere Polyurethanschaumplatten, oder Metalle, insbesondere Aluminium. Untergründe aus dem Baubereich sind bevorzugt.

Die wässrigen Beschichtungsmittel können nach manuellen Verfahren oder maschinellen Verfahren appliziert werden. Bei Handverfahren werden die wässrigen Beschichtungsmittel mit Hilfe von Bürsten, Pinseln, Rollern, Spachteln, Kellen, Traufeln oder Schaufeln auf den Untergrund aufgebracht. Bei maschinellen Verfahren werden die wässrigen Beschichtungsmittel mittels Spritzmaschinen, Putzmaschinen oder Robotern auf den Untergrund aufgebracht. Es können mehrere Schichten von Beschichtungsmitteln übereinander aufgetragen werden. Vorzugsweise wird nur eine Schicht der Beschichtungsmittel auf einen Untergrund aufgetragen. Im Anschluss an den Auftrag von Beschichtungsmitteln auf die Untergründe kann die Oberfläche des Auftrags geglättet werden, beispielsweise unter Einsatz von Glättscheiben oder Flügelglättern.

Die Beschichtungsmittel werden üblicherweise bei Umgebungstemperaturen appliziert, d.h. im Allgemeinen bei Temperaturen von 0 bis 50°C, insbesondere von 5 bis 35°C.

Die Untergründe können vor Applikation der Beschichtungsmittel grundiert werden. Als Grundierungsmittel eignen sich beispielsweise wässrige Dispersionen der oben genannten Polymere, vorzugsweise mit Feststoffgehalten von 10 bis 50%.

Schließlich können auf die erfindungsgemäßen dauerflexiblen Beschichtungen weitere Schichten aufgebracht werden, wie beispielsweise Farbbeschichtungen oder Bekleidungen oder Beläge aus Fliesen bzw. Platten für den Innen- oder Außenbereich. Ebenso kommen Beschichtungen aus Bodenspachtelmassen oder Estrichen in Frage. Häufig bilden die erfindungsgemäßen Beschichtungen aber die oberste bzw. abschließende Schicht. Die Beschichtungsmittel werden vorzugsweise zur Herstellung von dauerflexiblen Beschichtungen für Minen oder Tunnel eingesetzt; besonders bevorzugt zur Herstellung von Minen.

Die erfindungsgemäßen Beschichtungsmittel führen überraschenderweise zu dauerflexiblen Beschichtungen, die gegenüber herkömmlichen, zementären Beschichtungen ein verbessertes Reißdehnungsverhalten und somit eine verbesserte Rissüberbrückung zeigen, was einer Versprödung der Beschichtungen entgegenwirkt. Diese Aussagen treffen überraschenderweise sogar in verstärktem Maße für Beschichtungen zu, die nassen oder feuchten Bedingungen ausgesetzt sind. Die rissüberbrückenden Eigenschaften der erfindungsgemäßen Beschichtungen nehmen unter derartigen Bedingungen sogar zu - im Gegensatz zu entsprechenden zementären Beschichtungen. Damit eignen sich die erfindungsgemäß erhältlichen Beschichtungen in besonderem Maße, um beispielsweise Bauwerke vor eindringendem Wasser zu schützen.

Die folgenden Beispiele dienen der detaillierten Erläuterung der Erfindung und sind in keiner weise als Einschränkung zu verstehen.

### Beispiel 1 (Bsp. 1):

Zur Herstellung des Beschichtungsmittels wurden die einzelnen Bestandteile der unten angegebenen Rezeptur in folgender Reihenfolge unter Mischen in einen Toni-Mischer (handelsüblicher Labormischer) gegeben: zuerst das Kalkhydrat, dann die Füllstoffe, das Dispersionspulver und schließlich die übrigen Additive. Anschließend wurde während 15 Minuten auf Stufe 1 homogen vermischt. Aus der so erhaltenen Trockenmischung wurde in Analogie zu EN 196-1 mit der angegebenen Wassermenge das wässrige Beschichtungsmittel hergestellt.

Das wässrige Beschichtungsmittel wurde auf Teflonschalungen (Grundfläche: 30 x 15 cm) mit einer Nassfilmstärke von 2 mm aufgebracht. Die nassen Filme wurden mit einer Traufel geglättet. Nach 24 Stunden Lagerung unter Normalbedingungen nach DIN50014 waren die Filme ausgehärtet und wurden nach Abziehen von den Teflonschalungen folgenden Lagerbedingungen unterworfen:
- ein Film wurde für 28 Tage bei Normklima (23°C/50% relative Luftfeuchtigkeit) gelagert (Trockenlagerung);
- ein anderer, identischer Film wurde im Anschluss an die vorgenannte Trockenlagerung für weitere 38 Tage in Leitungswasser bei 23°C und anschließend für 28 Tage bei Normklima (23°C/50% relative Luftfeuchtigkeit) gelagert (Nasslagerung).

Rezeptur des Beschichtungsmittels:
10 Gew.-% Kalkhydrat,
40 Gew.-% Dispersionspulver Vinnapas^{®} 4040 N (Vinylacetat-Ethylen-Copolymer, stabilisiert mit Polyvinylalkohol und einem kationischen Schutzkolloid),
0,5 Gew.-% hochdisperser Kieselsäure (Wacker HDK H 15),
0,5 Gew.-% Entschäumer (Agitan P 800),
1,5 Gew.-% anorganischer Schichtsilikatverdicker (Optibent MF),
13,4 Gew.-% Omyacarb 20 BG (carbonatischer Füllstoff) und
34,1 Gew.-% Sand (0,063 bis 0,3 mm; silikatischer Füllstoff).

### Vergleichsbeispiel 2 (VBsp. 2):

Analog zu Beispiel 1, mit dem Unterschied, dass folgende Rezeptur zur Herstellung des Beschichtungsmittels eingesetzt wurde:
10 Gew.-% Portlandzement CEM I 42,5 N,
30 Gew.-% Dispersionspulver Vinnapas^{®} 4040 N,
0,5 Gew.-% hochdisperse Kieselsäure (Wacker HDK H 15),
0,5 Gew.-% Entschäumer (Agitan P 800),
1,5 Gew.-% anorganischer Schichtsilikatverdicker (Optibent MF),
17,8 Gew.-% Omyacarb 20 BG (carbonatischer Füllstoff) und
39,7 Gew.-% Sand (0,063 bis 0,3 mm; silikatischer Füllstoff).

Die Rezeptur enthält also einen Portlandzement an Stelle von Kalkhydrat von Beispiel 1.

### Anwendungstechnische Austestung

Nach ISO 527-3 (8/1995) wurden aus dem jeweiligen, nach der Trocken- bzw. Nasslagerung erhaltenen Film des Beispiels 1 bzw. des Vergleichsbeispiels 2 Normstäbe vom Typ 1 B ausgestanzt.

Anschließend wurde die Reißfestigkeit bzw. Reißdehnung der Normstäbe mittels Zugversuch nach ISO 527-3 (8/1995) bestimmt. Die Normstäbe wurden mit einer Zuggeschwindigkeit von 50 mm/min bis zum Versagen gedehnt. Die Ergebnisse der Austestung sind in Tabelle 1 aufgeführt.

**Tabelle: Austestung der Beschichtungen:**

| | Reißfestigkeit [N/mm²] | | Reißdehnung [%] | |
|---|---|---|---|---|
| | Trockenlagerung | Nasslagerung | Trockenlagerung | Nasslagerung |
| Bsp.1 | 1,4 | 2,2 | 45 | 61 |
| VBsp.2 | 1,7 | 2,5 | 29 | 8 |

Überraschenderweise waren die Reißdehnungswerte des Beispiels 1 nach Nasslagerung höher als nach Trockenlagerung (Tabelle 1). Dieser Befund steht im Gegensatz zu dem aus zementären Beschichtungen bekannten Verhalten (Vergleichsbeispiel 2). Zudem zeigen Beschichtungen des Beispiels 1 sowohl bei Trocken- wie bei Nasslagerung bessere Reißfestigkeiten als zementäre Beschichtungen (Vergleichsbeispiel 2). Da die Reißfestigkeit mit der rissüberbrückenden Eigenschaft von Beschichtungen korreliert, sind die erfindungsgemäßen Beschichtungen besonders flexibel. Dies trifft in besonders hohem Maße für Beschichtungen zu, die nassen Bedingungen ausgesetzt waren.

## Patentansprüche

1. Beschichtungsmittel auf Basis von einem oder mehreren mineralischen Bindemitteln, einem oder mehreren Polymeren, einem oder mehreren Füllstoffen und gegebenenfalls einem oder mehreren Additiven, **dadurch gekennzeichnet, dass** 2 bis 30 Gew.-% Kalk, bezogen auf das Trockengewicht der Beschichtungsmittel, als ein mineralisches Bindemittel und 0 bis 3 Gew.-% Fasern, bezogen auf das Trockengewicht der Beschichtungsmittel, im Beschichtungsmittel enthalten sind,
wobei die mineralischen Bindemittel zu 80 bis 100 Gew.-% Kalk sind, bezogen auf das Trockengewicht der mineralischen Bindemittel, und
die Polymere ausgewählt werden aus der Gruppe umfassend Mischpolymerisate von einem oder mehreren Vinylestern mit 1 bis 50 Gew.-% Ethylen;
Mischpolymerisate von Vinylacetat mit 1 bis 50 Gew.-% Ethylen und 1 bis 50 Gew.-% von einem oder mehreren weiteren Comonomeren aus der Gruppe Vinylester mit 1 bis 12 C-Atomen im Carbonsäurerest;
Mischpolymerisate von ein oder mehreren Vinylestern, 1 bis 50 Gew.-% Ethylen und vorzugsweise 1 bis 60 Gew.-% (Meth)Acrylsäureester von unverzweigten oder verzweigten Alkoholen mit 1 bis 15 C-Atomen; und
Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% (Meth)Acrylsäureester von unverzweigten oder verzweigten Alkoholen mit 1 bis 15 C-Atomen, welche noch 1 bis 40 Gew.-% Ethylen enthalten;
Mischpolymerisate mit ein oder mehreren Vinylestern, 1 bis 50 Gew.-% Ethylen und 1 bis 60 Gew.-% Vinylchlorid.

2. Beschichtungsmittel nach Anspruch 1, **dadurch gekennzeichnet, dass** die Füllstoffe Gemische von einem oder mehreren silikatischen Füllstoffen und einem oder mehreren carbonatischen Füllstoffen umfassen.

3. Beschichtungsmittel nach Anspruch 1 bis 2, **dadurch gekennzeichnet, dass** die Beschichtungsmittel 10 bis 60 Gew.-% Polymere enthalten, bezogen auf das Trockengewicht der Beschichtungsmittel.

4. Beschichtungsmittel nach Anspruch 1 bis 3, **dadurch gekennzeichnet, dass** die Beschichtungsmittel 20 bis 55 Gew.-% Polymere enthalten, bezogen auf das Trockengewicht der Beschichtungsmittel.

5. Beschichtungsmittel nach Anspruch 1 bis 4, **dadurch gekennzeichnet, dass** die Beschichtungsmittel 30 bis 50 Gew.-% Polymere enthalten, bezogen auf das Trockengewicht der Beschichtungsmittel.

6. Beschichtungsmittel nach Anspruch 1 bis 5, **dadurch gekennzeichnet, dass** 0 bis 20 Gew.-% der mineralischen Bindemittel zementäre Bindemittel sind, bezogen auf das Trockengewicht der mineralischen Bindemittel.

7. Beschichtungsmittel nach Anspruch 1 bis 6, **dadurch gekennzeichnet, dass** die Additive ein oder mehrere hochdisperse Kieselsäuren und/oder ein oder mehrere Schichtsilikate umfassen.

8. Verwendung der Beschichtungsmittel aus Anspruch 1 bis 7 als Dichtungsschlämme, Baukleber, Fugenmörtel, Reparaturmörtel oder Putze.

9. Verwendung der Beschichtungsmittel aus Anspruch 1 bis 7 zur Herstellung von dauerflexiblen Beschichtungen.

10. Verwendung der Beschichtungsmittel nach Anspruch 9,
**dadurch gekennzeichnet, dass** die dauerflexiblen Beschichtungen Schichtdicken von 1 bis 10 mm haben.

## Claims

1. Coating composition based on one or more mineral binders, one or more polymers, one or more fillers and optionally one or more additives, **characterized in that** 2% to 30% by weight of lime, based on the dry weight of the coating compositions, as a mineral binder and 0% to 3% by weight of fibres are present, based on the dry weight of the coating compositions, in the coating composition,
wherein 80% to 100% by weight of the mineral binders are lime, based on the dry weight of the mineral binders, and
the polymers are selected from the group encompassing copolymers of one or more vinyl esters with 1% to 50% by weight of ethylene; copolymers of vinyl acetate with 1% to 50% by weight of ethylene and 1% to 50% by weight of one or more further comonomers from the group of vinyl esters having 1 to 12 C atoms in the carboxylic acid radical;
copolymers of one or more vinyl esters, 1% to 50% by weight of ethylene and preferably 1% to 60% by weight of (meth)acrylic esters of unbranched or branched alcohols having 1 to 15 C atoms; and copolymers with 30% to 75% by weight of vinyl acetate, 1% to 30% by weight of vinyl laurate or vinyl ester of an alpha-branched carboxylic acid having 9 to 11 C atoms, and also 1% to 30% by weight of (meth)acrylic esters of unbranched or branched alcohols having 1 to 15 C atoms, further comprising 1% to 40% by weight of ethylene; copolymers with one or more vinyl esters, 1% to 50% by weight of ethylene and 1% to 60% by weight of vinyl chloride.

2. Coating composition according to Claim 1, **characterized in that** the fillers comprise mixtures of one or more silicatic fillers and one or more carbonatic fillers.

3. Coating composition according to Claim 1 or 2, **characterized in that** the coating compositions comprise 10% to 60% by weight of polymers, based on the dry weight of the coating compositions.

4. Coating composition according to Claim 1 to 3, **characterized in that** the coating compositions comprise 20% to 55% by weight of polymers, based on the dry weight of the coating compositions.

5. Coating composition according to Claim 1 to 4, **characterized in that** the coating compositions comprise 30% to 50% by weight of polymers, based on the dry weight of the coating compositions.

6. Coating composition according to Claim 1 to 5, **characterized in that** 0% to 20% by weight of the mineral binders are cementitious binders, based on the dry weight of the mineral binders.

7. Coating composition according to Claim 1 to 6, **characterized in that** the additives comprise one or more highly disperse silicas and/or one or more phyllosilicates.

8. Use of the coating compositions from Claim 1 to 7 as grouts, construction adhesives, jointing mortars, repair mortars or renders.

9. Use of the coating compositions from Claim 1 to 7 for producing permanently flexible coatings.

10. Use of the coating compositions according to Claim 9, **characterized in that** the permanently flexible coatings have coat thicknesses of 1 to 10 mm.

## Revendications

1. Agent de revêtement à base d'un ou de plusieurs liants minéraux, d'un ou de plusieurs polymères, d'une ou de plusieurs charges et éventuellement d'un ou de plusieurs additifs, **caractérisé en ce que** 2 à 30 % en poids de chaux, par rapport au poids sec des agents de revêtement, en tant que liant minéral, et 0 à 3 % en poids de fibres, par rapport au poids sec des agents de revêtement, sont contenus dans l'agent de revêtement, les liants minéraux étant de la chaux à hauteur de 80 à 100 % en poids, par rapport au poids sec des liants minéraux, et
les polymères étant choisis dans le groupe comprenant les copolymères d'un ou de plusieurs esters de vinyle avec 1 à 50 % en poids d'éthylène ;
les copolymères d'acétate de vinyle avec 1 à 50 % en poids d'éthylène et 1 à 50 % en poids d'un ou de plusieurs comonomères supplémentaires du groupe constitué par les esters de vinyle contenant 1 à 12 atomes C dans le radical acide carboxylique ;
les copolymères d'un ou de plusieurs esters de vinyle, 1 à 50 % en poids d'éthylène et de préférence 1 à 60 % en poids d'esters de l'acide (méth)acrylique d'alcools non ramifiés ou ramifiés contenant 1 à 15 atomes C ; et les copolymères de 30 à 75 % en poids d'acétate de vinyle, 1 à 30 % en poids de laurate de vinyle ou d'esters de vinyle d'un acide carboxylique alpha-ramifié contenant 9 à 11 atomes C, ainsi que 1 à 30 % en poids d'esters de l'acide (méth)acrylique d'alcools non ramifiés ou ramifiés contenant 1 à 15 atomes C, qui contiennent encore 1 à 40 % en poids d'éthylène ;
les copolymères contenant un ou plusieurs esters de vinyle, 1 à 50 % en poids d'éthylène et 1 à 60 % en poids de chlorure de vinyle.

2. Agent de revêtement selon la revendication 1, **caractérisé en ce que** les charges comprennent des mélanges d'une ou de plusieurs charges silicatées et d'une ou de plusieurs charges carbonatées.

3. Agent de revêtement selon les revendications 1 à 2, **caractérisé en ce que** les agents de revêtement contiennent 10 à 60 % en poids de polymères, par rapport au poids sec des agents de revêtement.

4. Agent de revêtement selon les revendications 1 à 3, **caractérisé en ce que** les agents de revêtement contiennent 20 à 55 % en poids de polymères, par rapport au poids sec des agents de revêtement.

5. Agent de revêtement selon les revendications 1 à 4, **caractérisé en ce que** les agents de revêtement contiennent 30 à 50 % en poids de polymères, par rapport au poids sec des agents de revêtement.

6. Agent de revêtement selon les revendications 1 à 5, **caractérisé en ce que** 0 à 20 % en poids des liants minéraux sont des liants cimentaires, par rapport au poids sec des liants minéraux.

7. Agent de revêtement selon les revendications 1 à 6, **caractérisé en ce que** les additifs comprennent une ou plusieurs silices hautement dispersées et/ou un ou plusieurs silicates en feuillets.

8. Utilisation des agents de revêtement selon les revendications 1 à 7 en tant que boues d'étanchéité, colles de construction, mortiers de jointoyage, mortiers de réparation ou enduits.

9. Utilisation des agents de revêtement selon les revendications 1 à 7 pour la fabrication de revêtements de flexibilité permanente.

10. Utilisation des agents de revêtement selon la revendication 9, **caractérisée en ce que** les revêtements de flexibilité permanente ont des épaisseurs de couche de 1 à 10 mm.
